# EUROPÄISCHE PATENTSCHRIFT

(11) **EP 1 518 639 B1**
(45) Veröffentlichungstag und Bekanntmachung des Hinweises auf die Patenterteilung: **23.01.2008**
(21) Anmeldenummer: 04021644.2
(22) Anmeldetag: 10.09.2004
(51) Int. Cl.: B23Q 11/00, B23Q 7/00

(54) **Vorrichtung zum Abführen von Fertigungsteilen aus einem Prozessraum**
Device for removing ready workpieces from a machining area
Dispositif pour enlever des pièces finies d'une chambre de traitement

(30) Priorität: 24.09.2003 DE 10344497
(43) Veröffentlichungstag der Anmeldung: 30.03.2005
(73) Patentinhaber: Huber, Stefan, 75177 Pforzheim (DE)
(72) Erfinder: Huber, Stefan, 75177 Pforzheim (DE)
(74) Vertreter: Maser, Jochen

(56) Entgegenhaltungen:
- EP-A- 0 282 717
- DE-A1- 1 602 713
- DE-A1- 2 823 479
- DE-U1- 8 808 183
- PATENT ABSTRACTS OF JAPAN Bd. 004, Nr. 164 (M-041), 14. November 1980 (1980-11-14) & JP 55 112705 A (YOSHIDA SEISAKUSHO:KK), 30. August 1980 (1980-08-30)
- PATENT ABSTRACTS OF JAPAN Bd. 1999, Nr. 04, 30. April 1999 (1999-04-30) & JP 11 010407 A (OKUMA MACH WORKS LTD), 19. Januar 1999 (1999-01-19)
- PATENT ABSTRACTS OF JAPAN Bd. 010, Nr. 211 (M-501), 24. Juli 1986 (1986-07-24) & JP 61 050746 A (MOTOKANE MATSUMOTO), 13. März 1986 (1986-03-13)

## Beschreibung

Die Erfindung betrifft eine Vorrichtung zum Abführen von Fertigungsteilen aus einem Prozessraum, insbesondere aus einem Prozessraum in Werkzeugmaschinen, welche zur Bearbeitung von Fertigungsteilen vorgesehen sind.

Aus der DE 16 02 713 A1 ist eine Einrichtung zum Übernehmen eines Werkstücks im Arbeitsraum einer Werkstückmaschine und zum Transport desselben zu einer außerhalb des Arbeitsraumes liegenden Übergabestelle bekannt geworden. Diese Einrichtung umfasst einen zweiteiligen Aufnahmebehälter, der aus einem Gefäß und einer Verschlussplatte ausgebildet ist. Das Gefäß weist eine durch zwei Wandteile gebildete Mulde auf und ist durch eine Rückwand teilweise verschlossen. An einer dem aufzunehmenden Werkstück zugekehrten Seite ist das Gefäß offen und kann mit Hilfe der Verschlussplatte teilweise verschlossen werden. Die Verschlussplatte ist dabei derart bemessen, dass sie in ihrer Schließstellung am Gefäß eine Öffnung belässt, in die das Werkstück beim Runterschwenken der Einrichtung in eine Entnahmeposition eintauchen kann. Eine solche Einrichtung weist den Nachteil auf, dass ein schnelles Heraustransportieren der Werkstücke zur Erzielung von kurzen Taktzeiten nicht ermöglicht ist, da das Gefäß selbst bei einer geschlossenen Verschlussplatte einseitig offen ausgebildet ist und das Werkstück herausfallen kann.

Aus der EP 0 282 717 A1 ist eine programmgesteuerte Werkzeugmaschine für die spanabhebende Bearbeitung von Werkstücken bekannt geworden, welche mit einer Auffangvorrichtung nach der Bearbeitung des Werkstücks das von einer Spannvorrichtung freigegebene Werkstück aufnimmt. Diese Auffangvorrichtung ist als offene Auffangschale ausgebildet. Schnelle Transportbewegungen zur Erzielung von kurzen Taktzeiten bergen die Gefahr in sich, dass die aufgenommenen Teile herausfallen.

Aus der JP 55112705 geht eine Vorrichtung zur Entnahme von Fertigungsteilen aus einem Prozessraum hervor, welche ebenfalls eine offene Auffangschale aufweisen. Eine analoge Anordnung geht aus der DE 28 23 479 A1 hervor. Bei diesen offenen Auffangschalen besteht die selbe Gefahr wie bei der Auffangschale gemäß der EP 0 282 717 A1.

Der Erfindung liegt deshalb die Aufgabe zugrunde, eine Vorrichtung zum Abführen von Fertigungsteilen aus einem Prozessraum vorzuschlagen, die eine sichere Aufnahme des Fertigungsteils und einen kontrollierten Abtransport aus dem Prozessraum ermöglicht, um die Prozesssicherheit zu erhöhen.

Diese Aufgabe wird erfindungsgemäß durch die Merkmale des Anspruchs 1 gelöst.

Durch den Einsatz eines Aufnahmebehälters mit einem öffenbaren Deckel und öffenbaren Verschlusselement, welcher zur Aufnahme von wenigstens einem Fertigungsteil vorgesehen und zur Werkstückaufnahme positionierbar ist, wird eine gesicherte Entnahme des oder der Fertigungsteile sowie eine sichere Entleerung des Aufnahmebehälters ermöglicht. Durch die Ausgestaltung des Aufnahmebehälters können auch sehr kleine und leichte Teile sicher aus dem Prozessraum herausgeführt werden, selbst wenn diese mit einem Kühl- oder Bearbeitungsmedium und/oder Spänen oder dergleichen behaftet sind.

Durch den erfindungsgemäßen Auffangbehälter kann des Weiteren sichergestellt werden, dass unabhängig der Verfahrgeschwindigkeit zum Herausführen des Aufnahmebehälters aus dem Prozessraum das zumindest eine aufgenommene Fertigungsteil sicher herausgeführt wird.

Damit geringe Taktzeiten bei einer hohen Prozesssicherheit ermöglicht sind, umfasst der erfindungsgemäße Aufnahmebehälter einen Deckel der in einer Aufnahmeposition geöffnet ist und ein Verschlusselement, das in einer Entleerungsposition geöffnet ist. Dadurch kann in Analogie zur Betätigung des Deckels beim Überführen in den Prozessraum eine Betätigung des Verschlusselementes für den öffenbaren Abschnitt beim Herausführen des Aufnahmebehälters aus dem Prozessraum gegeben sein.

Nach einer weiteren vorteilhaften Ausgestaltung der Erfindung ist vorgesehen, dass vor oder während dem Überführen des Aufnahmebehälters in die Aufnahmeposition der Deckel des Behälters geöffnet wird. Dadurch kann der Aufnahmebehälter zur Aufnahme des zumindest einen Fertigungsteils vorbereitet in der Prozesskammer positioniert sein, um auch geringe Taktzeiten zu ermöglichen. Die Positionierung des Aufnahmebehälters beziehungsweise der Beginn der Positionierung des Aufnahmebehälters in dem Prozessraum ist auf den Arbeitstakt der Werkzeugmaschinen abgestimmt und wird bevorzugt von dieser gesteuert.

Die Betätigung des Deckels für den Aufnahmebehälter kann aktiv durch eine Stelleinheit oder passiv durch einen Anschlag erfolgen. Beispielsweise kann an einem Positionierantrieb für den Aufnahmebehälter ein Anschlag vorgesehen sein, wodurch bewirkt wird, dass während dem Einführen des Aufnahmebehälters in den Prozessraum gleichzeitig eine Öffnungsbewegung des Deckels erfolgt. Dadurch kann auch die Größe und die Ausgestaltung des Aufnahmebehälters vereinfacht ausgebildet sein. Gleichzeitig wird ermöglicht, dass eine Vielfalt in der Geometrie zur Ausgestaltung des Aufnahmebehälters ermöglicht ist, um auch bei sehr kleinen oder schlanken Prozessräumen beziehungsweise Zuführwegen in den Prozessraum ein Einführen des Aufnahmebehälters zu ermöglichen.

Nach einer vorteilhaften Ausgestaltung der Erfindung ist vorgesehen, dass die Abtransporteinheit und eine Unterseite des Aufnahmebehälters in einer Entleerungsposition des Aufnahmebehälters derart zueinander positioniert sind, dass beim Überführen des Aufnahmebehälters in eine Entleerungsposition einerseits ein Verschlussdeckel der Abtransporteinheit geöffnet und parallel hierzu in gleichem Maße ein Verschlusselement am Aufnahmebehälter geöffnet wird. Somit ist sichergestellt, dass eine sichere Übergabe des oder der Fertigungsteile aus dem Aufnahmebehälter in die Abtransporteinheit gegeben ist und die Abtransporteinheit bei Nichtgebrauch geschlossen ist.

Vorteilhafterweise ist ein Wandabschnitt, der zum Deckel oder zur Auflagefläche positioniert ist, als Abstreifer ausgebildet, so dass beim Verschieben der Auflagefläche oder des Verschlusselementes in der Entleerungsposition sichergestellt ist, dass die Fertigungsteile in die Abtransporteinheit übergeführt werden.

Weitere vorteilhafte Ausgestaltungen und Weiterbildungen sind in den weiteren Ansprüchen angegeben.

Die Erfindung sowie weitere vorteilhafte Ausführungsformen und Weiterbildungen derselben werden im Folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Seitenansicht einer in einem Prozessraum angeordneten Vorrichtung,
- Figur 2: eine vergrößerte Darstellung eines erfindungsgemäßen Aufnahmebehälters,
- Figur 3: eine schematische Draufsicht auf einen Aufnahmebehälter gemäß Figur 2,
- Figur 4: eine schematische Schnittdarstellung eines Aufnahmebehälters gemäß Figur 2,
- Figur 5: eine schematische Seitenansicht einer in einem Prozessraum angeordneten alternativen Vorrichtung zu Figur 1,
- Figur 6: eine schematische Draufsicht auf eine alternative Ausführungsform eines Aufnahmebehälters in einer geschlossenen Position und
- Figur 7: eine schematische Draufsicht auf einen Aufnahmebehälter gemäß Figur 6 in einer geöffneten Position.

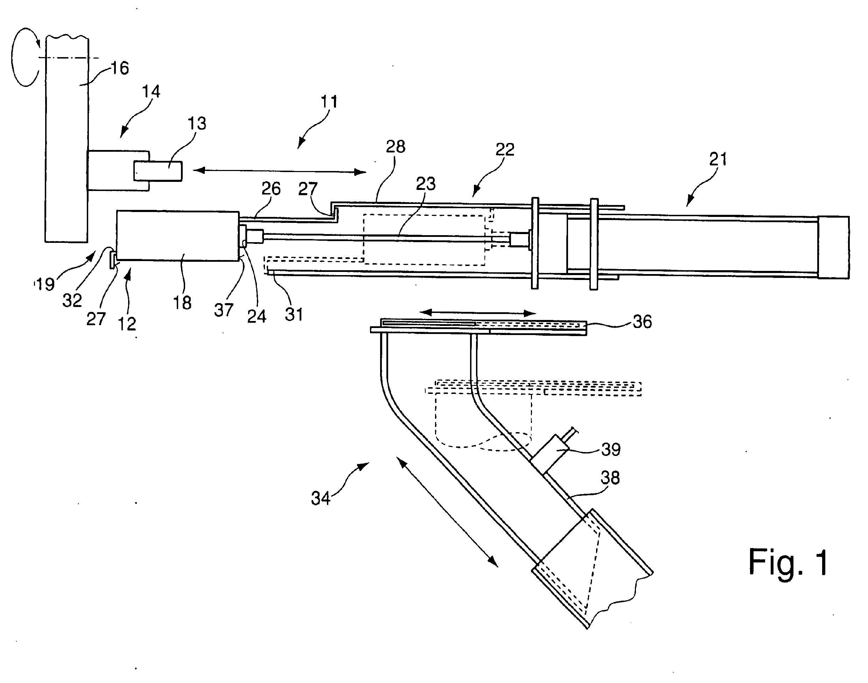

In Figur 1 ist eine erfindungsgemäße Vorrichtung 11 in einer Aufnahmeposition 12 zu einem Fertigungsteil 13 angeordnet, um dieses Fertigungsteil 13 nach dem Auswerfen aus einer Werkstückaufnahme 14 aufzunehmen. Die Werkstückaufnahme 14 ist beispielsweise an einem nicht näher dargestellten Mehrspindelantrieb oder in einer Werkzeugmaschine oder in einem Bearbeitungszentrum vorgesehen. Bevorzugt sind mehrere Werkstückaufnahmen 14 auf einer rotierenden Scheibe 16 vorgesehen, so dass mehrere Fertigungsteile gleichzeitig bearbeitet werden können und durch taktweises Weiterschalten eine teilweise oder vollständige Bearbeitung der Fertigungsteile 13 ermöglicht ist. Die Fertigungsteile 13 bilden bei der Entnahme ein Zwischen- oder ein Endprodukt.

In der in Figur 1 dargestellten Position wurde der letzte Bearbeitungsschritt für das Fertigungsteil 13 durchgeführt, so dass dieses aus der Werkzeugmaschine herausgeführt werden kann. Der letzte Arbeitsschritt kann eine Messung der Länge der Bauteile umfassen. Des Weiteren kann kurz vor der Freigabe des Werkstücks 13 aus der Werkstückaufnahme eine Kontrollmessung wie eine Längendurchmesser- oder Toleranzmessung vorgegebener Abschnitte erfolgen.

Die Vorrichtung 11 ist in diesem Ausführungsbeispiel als Aufnahmebehälter 18 ausgebildet, der in Abhängigkeit der Größe des Prozessraumes 19 zur Aufnahme von einem oder mehreren Fertigungsteilen ausgebildet ist. Der Aufnahmebehälter 18 wird über einen Stellantrieb 21 horizontal verfahren, so dass dieser aus der Aufnahmeposition 12 in eine Entleerungsposition 22, welche gestrichelt dargestellt ist, überführbar ist. Der Stellantrieb 21 ist beispielsweise als pneumatischer Zylinder ausgebildet. Alternativ können jegliche weitere Antriebe, wie beispielsweise hydraulische, elektrohydraulische, elektrische oder mechanische Antriebe oder Stelleinheiten, vorgesehen sein.

In Abhängigkeit des zur Verfügung stehenden Raumes, der an den Prozessraum 19 angrenzt, wird die Zuführbewegung und Entnahmebewegung des Aufnahmebehälters 18 ausgeführt. Alternativ zu der in Figur 1 dargestellten horizontalen Bewegung ist auch ermöglicht, dass beispielsweise ein Zuführen und Abführen des Aufnahmebehälters 18 schräg von unten oder schräg von oben erfolgt. Für diesen Fall angepasst ist eine Schubstange 23 über ein entsprechendes Kupplungselement 24 an dem Aufnahmebehälter 18 angeordnet. Alternativ zu einer geradlinigen Bewegung, welche beispielsweise durch einen Hubzylinder durchgeführt wird, kann auch eine kurvengesteuerte Bewegung oder eine zwei- oder dreidimensionale Bewegungsbahn vorgesehen sein. Diese Verfahrwege zwischen der Aufnahmeposition 12 und der Entleerungsposition 22 werden durch die zur Verfügung stehenden Räume in und um den Prozessraum 19 bestimmt.

Der Aufnahmebehälter 18 weist einen Deckel 26 auf, der vorzugsweise als Schiebeelement ausgebildet ist. Dieser Deckel 26 weist eine Angriffsfläche 27 auf, welche an einem Anschlag 28 während dem Überführen aus der Entleerungsposition 22 in die Aufnahmeposition 12 angreift. Somit kann in einfacher Weise während der Verfahrbewegung der Aufnahmebehälter 18 zur Aufnahme des Werkstücks 13 geöffnet werden. Alternativ kann vorgesehen sein, dass ein weiterer Stellantrieb vorgesehen ist, der in oder außerhalb des Aufnahmebehälters 18 vorgesehen ist, welcher in oder unmittelbar vor Erreichen der Aufnahmeposition 12 den Deckel 26 öffnet.

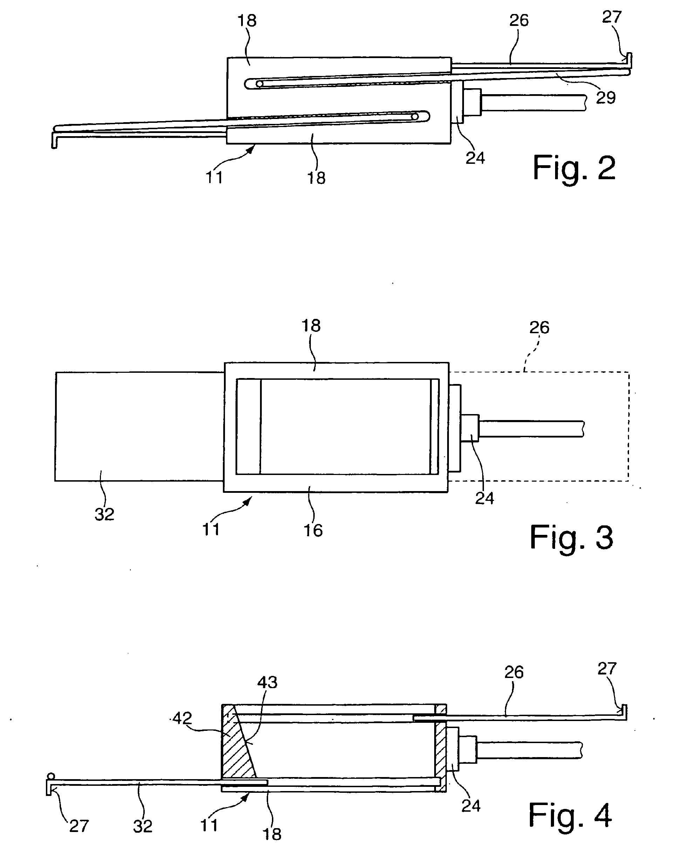

Nach der Aufnahme des Fertigungsteils 13 kann vorzugsweise über ein in dem Aufnahmebehälter 18 vorgesehenen Sensor ein Signal ausgegeben werden, wonach der Deckel 26 aus seiner Öffnungsposition selbständig in eine Schließposition übergeführt wird. Vorteilhafterweise kann dies durch eine Zugfeder 29 erfolgen, wie dies in Figur 2 dargestellt ist. Sofern ein derartiges Signal ausgegeben wird, kann der Anschlag 28 die Angriffsfläche 27 freigeben. Alternativ kann vorgesehen sein, dass der Deckel 26 sich automatisch beim Verfahren aus der Aufnahmeposition 12 in die Entleerungsposition 22 schließt. Alternativ zum Deckel 26 kann vorgesehen sein, dass in dem Aufnahmebehälter 18 eine Art Falle ausgebildet ist, wonach ermöglicht ist, dass das von oben herabfallende Fertigungsteil 13 in den Aufnahmebehälter 18 gelangt, jedoch selbst bei einem schnellen und ruckartigen Verfahren ein Herausfallen nach oben durch die Falle verhindert wird und ein Deckel nicht erforderlich ist.

Die Verfahrgeschwindigkeit zwischen der Aufnahmeposition 12 und der Entleerungsposition 22 wird durch die Taktzeit der Werkzeugmaschine bestimmt und kann kleiner als fünf Sekunden sein. Die Ansteuerung des Stellantriebes 21 wird bevorzugt über die selbe Steuerung der Werkzeugmaschine vorgenommen, so dass eine Abstimmung auf die Taktzeiten der Werkzeugmaschine ermöglicht ist.

Die in Figur 1 dargestellte Ausführungsform ermöglicht, dass nach der Aufnahme eines Fertigungsteils 13 eine Entleerung des einen Fertigungsteils 13 erfolgt. Beim Überführen des Aufnahmebehälters 18 in die Entleerungsposition 22 ist vorteilhafterweise vorgesehen, dass ein unterhalb oder seitlich zum Aufnahmebehälter 18 angeordneter Anschlag 31 an einem Verschlusselement 32 angreift, welches vorzugsweise an einer Unterseite des Aufnahmebehälters 18 vorgesehen ist. In einer Ausführungsform ist das Verschlusselement 32 in Analogie zum Deckel 26 als Schiebeelement ausgebildet, welches eine Angriffsfläche 27 aufweist, das an dem Anschlag 31 anliegt. Alternativ kann das Verschlusselement 32 auch an einem seitlichen Abschnitt vorgesehen sein. Dieses Verschlusselement 32 öffnet sich zum Entleeren des Fertigungsteils 13 aus dem Aufnahmebehälter 18. Dadurch kann das Fertigungsteil 13 aus dem Aufnahmebehälter 18 in eine Abtransporteinrichtung 34 übergeführt werden, so dass das oder die Fertigungsteile einem Sammelbehälter, der nicht näher dargestellt ist, zugeführt werden.

Die Abtransporteinheit 34 ist gemäß diesem Ausführungsbeispiel durch ein Materialrohr gebildet, welches in der Länge und der Positionierung an die Entleerungsposition 22 des Aufnahmebehälters 18 anpassbar ist. Die Abtransporteinrichtung 34 kann vorzugsweise mit einem Volumenstrom betrieben werden, so dass eine Absaugung erfolgt. Ebenso kann auch ausschließlich durch die Schwerkraft der Fertigungsteile 13 ein Abtransport ermöglicht sein.

Die Abtransporteinheit 34 weist vorteilhafterweise ebenfalls ein Verschlusselement 36 auf, um vor Verschmutzungen zu schützen. Dieses Verschlusselement 36 wird vorteilhafterweise beim Überführen des Aufnahmebehälters 18 in die Entleerungsposition 22 gleichzeitig geöffnet. Vorteilhafterweise liegt das Verschlusselement 36 an einer Stirnseite 37 des Aufnahmebehälters 18 oder einem davor angeordneten Anschlag an und wird durch diesen während dem Verfahren in die Entleerungsposition 22 geöffnet. Damit kann sichergestellt sein, dass eine Verschmutzung oder Verstopfung der Abtransporteinrichtung 34 nicht gegeben ist.

In einem Materialrohr 38 der Abtransporteinrichtung 34 kann zumindest ein Sensor 39 vorgesehen sein, welcher ein abtransportiertes Fertigungsteil erfasst. Dadurch kann eine zusätzliche Kontrolle über die Anzahl der in einen Sammelbehälter übergeführten Fertigungsteile gegeben sein.

In den Figuren 2 bis 4 ist der in Figur 1 dargestellte Auffangbehälter 18 näher dargestellt. Sowohl der Deckel 26 als auch das Verschlusselement 32 sind bevorzugt durch eine Zugfeder 29 aus einer geöffneten Position in eine Schließposition selbständig überführbar. Alternativ kann vorgesehen sein, dass mechanische Antriebselemente oder Elektromotoren vorgesehen sind. Alternativ zu dieser Ausführungsform können auch externe beziehungsweise außerhalb des Aufnahmebehälters 18 liegende Antriebe und Betätigungselemente vorgesehen sein, um den Deckel 26 und das Verschlusselement 32 zu betätigen.

Ein dem Prozessraum 19 zugewandter Wandabschnitt 42 ist bevorzugt mit einer Schräge 43 ausgebildet. Dadurch kann der Vorteil erzielt werden, dass die Fertigungsteile 13 entlang der Schräge 43 mit Sicherheit zum Boden hin abgleiten. Gleichzeitig kann dadurch ermöglicht werden, dass eine Abstreiferfunktion beim Öffnen des Verschlusselementes 32 gegeben ist. Bei der Aufnahme von mehreren Fertigungsteilen 13 gleichzeitig in dem Aufnahmebehälter 18 kann somit sichergestellt sein, dass ein Verkeilen der Fertigungsteile 13 während der Öffnungsbewegung des Verschlusselementes 32 unterbleibt.

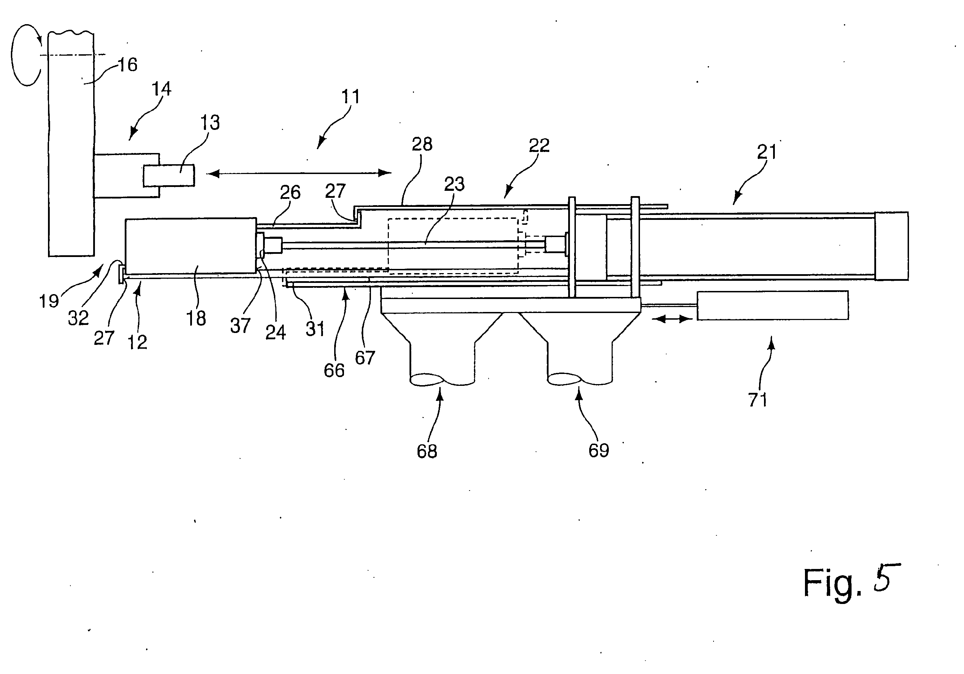

In Figur 5 ist eine alternative Ausführungsform der erfindungsgemäßen Vorrichtung 11 zu Figur 1 dargestellt. Im Hinblick auf die Übereinstimmungen wird auf Figur 1 Bezug genommen. Diese alternative Ausführungsform weist ein Grundmodul 66 auf, das zumindest einen nicht näher dargestellten Befestigungsabschnitt zur Verbindung mit dem Stellantrieb 21 aufweist und eine Führung 67 umfasst, in der der Aufnahmebehälter 18 hin und her bewegbar ist. Dieses Grundmodul 66 ermöglicht gleichzeitig die Anordnung und Aufnahme einer Abtransporteinrichtung 34 beispielsweise gemäß Figur 1 oder einer Abtransporteinrichtung 34 gemäß Figur 8. Letztere ist verschiebbar an dem Grundmodul 66 angeordnet. Die Abtransporteinrichtung 34 weist eine erste Rohrleitung 68 zum Abtransport von Gut-Teilen und eine zweite Rohrleitung 69 zum Abtransport von Schlecht-Teilen auf. In Abhängigkeit einer Messung am Bauteil im letzten Fertigungsschritt oder nach dem letzten Fertigungsschritt wird über einen Stellantrieb 71 die Abtransporteinrichtung 34 in eine Gut- oder Schlecht-Position übergeführt, so dass nach der Entnahme des Bauteils 13 durch den Aufnahmebehälter 18 die erste oder zweite Rohrleitung 68, 69 in der Entleerungsposition 22 zum Aufnahmebehälter 18 positioniert ist. Somit kann trotz der Kürze der Taktzeiten noch vor der Entnahme des Bauteils 13 aus der Werkstückaufnahme 14 eine Sortierung nach Gut- und Schlecht-Teilen eingeleitet werden.

Das Grundmodul 66 ist zur Aufnahme von unterschiedlichen Größen von Aufnahmebehältern 18 und/oder Abtransporteinrichtungen 34 vorgesehen. Die in Figur 5 dargestellte Abtransporteinrichtung 34 kann ebenfalls die Sensoren 39 zur Zählung und Überwachung der abtransportierten Teile vorgesehen sein.

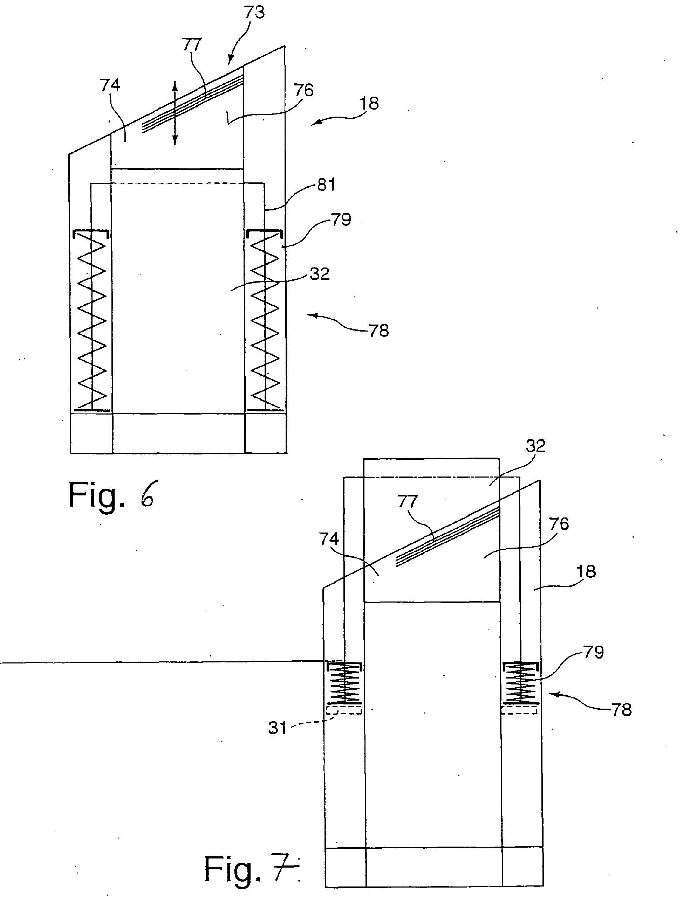

In Figur 6 und 7 ist eine alternative Ausgestaltung eines Aufnahmebehälters 18 dargestellt. Die Draufsicht gemäß Figur 9 zeigt den Aufnahmebehälter in einer geschlossenen Position. Beispielsweise ist eine Vorderseite 73 des Aufnahmebehälters 18 keilförmig vorgesehen, um aufgrund des engen Prozessraumes eine zuverlässige Entnahme zu ermöglichen, indem zumindest der Boden das Bauteil 13 vollständig untergreift. Der Behälter 18 ist in diesem Ausführungsbeispiel mit einer stirnseitigen Öffnung 74 ausgebildet, wobei die rechte und linke Wandseite geschlossen ist. Der Behälter 18 wird in den Prozessraum unterhalb des Bauteils 13 positioniert. Über beispielsweise eine Schräge oder Rutsche 76 gelangt das Bauteil 13 an einen tieferen Abschnitt des Bodens beziehungsweise Verschlusselementes 32 zum Abtransport. Bei einem Aufnahmebehälter 18, dessen Stirnseite 73 durch eine Öffnung 74 ausgebildet ist, kann vorteilhafterweise eine Bürstenleiste 77 oder dergleichen vorgesehen sein, wodurch ermöglicht wird, dass das Bauteil beim Einführen des Aufnahmebehälters 18 in den Prozessraum ungehindert durch die Bürstenleiste 77 hindurchgeführt wird, jedoch bei einer schnellen und ruckartigen Entnahme das Bauteil innerhalb des Aufnahmebehälters 18 gefangen gehalten bleibt.

Das Verschlusselement 32 wird alternativ zu den Ausführungsformen gemäß den Figuren 2 bis 4 durch eine Zwangsführung 78 in einer geschlossenen Position gehalten. Diese Zwangsführung 78 umfasst beispielsweise ein linkes und rechtes Druckelement 79, das über eine Halterung 81 an dem Boden beziehungsweise dem Verschlusselement 32 angreift. Durch das Druckelement 79, das als Druckfeder ausgebildet ist, wird das Verschlusselement 32 in einem geschlossenen Zustand gehalten.

Sobald der Aufnahmebehälter 18 aus einer Entnahmeposition in eine Entleerungsposition 22 übergeführt wird, greift ein Anschlag 31 an dem Verschlusselement 32 an und betätigt das Druckelement 79. Dadurch wird das Verschlusselement 32 geöffnet. Beim Herausfahren aus der Entleerungsposition 22 schließt das Verschlusselement 32 aufgrund des Druckelementes 79 selbständig. Die Halterung 81 ist beispielsweise als U-förmiger Bügel ausgebildet, der auf einer Unterseite an dem Verschlusselement 32 befestigt ist und links und rechts in einer Druckkammer aufgenommen ist, in dem auch jeweils das Druckelement 39 geführt ist. Hierbei kann es sich beispielsweise um eine Druckfeder, um Tellerfedern oder um andere gummielastische Dämpfungselemente handeln, die einen gewissen Stellweg zulassen und eine schnelle Rückstellbewegung zum Schließen des Behälters sicherstellen. Der Aufnahmebehälter 18 sowie der Deckel 26, das Verschlusselement 32 und das Grundmodul 66 als auch die Abtransporteinrichtung 34 sind bevorzugt aus Kunststoff ausgebildet. Besonders beanspruchte Teile, wie Führungen, können durch metallische Materialien ausgebildet sein, so dass diese metallischen Führungselemente eingesetzt werden.

Die inneren Wandabschnitte des Aufnahmebehälters 18 sind bevorzugt rund oder gerundet ausgebildet. Dadurch wird ermöglicht, dass Teile nicht in Ecken haften bleiben. Die Haftwirkung wird durch die mit Schmier- und/oder Kühlflüssigkeit versehenen Teile erhöht. Des Weiteren ist vorteilhafterweise vorgesehen, dass die Innenseite des Verschlusselementes 32, also die zum Inneren des Aufnahmebehälters 18 weisenden Auflageflächen, als raue Oberflächen ausgebildet ist, um ein Anhaften der Teile zu verringern. Zusätzlich können geriffelte oder gewellte Bodenformen zum Einsatz kommen, um eine sichere Entleerung nach jedem Arbeitstakt oder nach mehreren Arbeitstakten zu ermöglichen.

Die in Figur 5 dargestellte Abtransporteinrichtung 34 kann auch mit weiteren Rohrleitungen versehen sein. Alternativ zur Sortierung von Gut- und Schlecht-Teilen können auch in einer Bearbeitungsmaschine unterschiedlich gefertigte Bauteile entsprechend aus dem Prozessraum entfernt und dem jeweiligen Warenkorb zugeordnet werden. Bei einer größeren Anzahl von Rohrleitungen 68, 69, die für das Abtransportieren vorgesehen sind, kann auch eine halbkreisförmige oder eine längliche Schiene dem Grundmodul zugeordnet werden, die im Wesentlichen rechtwinklig zur Antriebsrichtung des Stellantriebes 21 verläuft.

Die Vorrichtung zum Abführen von Fertigungsteilen kann auch durch eine Kombination eines Aufnahmebehälters und einer Absaugeinrichtung ausgebildet sein.

Ebenso kann vorgesehen sein, dass mehrere Vorrichtungen zum Abführen von Fertigungsteilen einer Werkzeugmaschine zugeordnet sind oder dass mit einer Antriebseinheit mehrere Vorrichtungen in den Prozessraum hinein- und aus dem Prozessraum herausgeführt werden oder eine beliebige Kombination der Anordnung von einer oder mehreren Vorrichtungen zu einer oder mehreren Werkzeugmaschinen ausgebildet ist.

## Patentansprüche

1. Vorrichtung zum Abführen von Fertigungsteilen (13) aus einem Prozessraum (19), insbesondere aus einem Prozessraum in Werkzeugmaschinen, welche nach der Bearbeitung von zumindest einem Fertigungsteil zur Aufnahme in den Prozessraum (19) positioniert ist, um das zumindest eine Fertigungsteil aus dem Prozessraum (19) herauszuführen, mit einem Aufnahmebehälter (18), der zur Aufnahme von wenigstens einem Fertigungsteil (13) vorgesehen ist und zur Aufnahme des zumindest einen Fertigungsteils (13) an die taktweise Bearbeitung der Fertigungsteile (13) anpassbar ist, **dadurch gekennzeichnet, dass** der Aufnahmebehälter (18) einen Deckel (26) und einen öffenbaren Abschnitt mit einem Verschlusselement (32) aufweist, wobei der Deckel (26) nach der Aufnahme des Fertigungsteils (13) oder während dem Herausführen des Aufnahmebehälters (18) aus dem Prozessraum (19) schließt und das Verschlusselement (32) in einer Entleerungsposition (22) des Aufnahmebehälters (18) geöffnet ist.

2. Vorrichtung nach Anspruch 1, **dadurch gekennzeichnet, dass** vor oder während dem Überführen des Aufnahmebehälters (18) in die Aufnahmeposition (12) der Deckel (26) des Aufnahmebehälters (18) betätigbar ist.

3. Vorrichtung nach Anspruch 1, **dadurch gekennzeichnet, dass** der Deckel (26) des Aufnahmebehälters (18) aktiv durch eine Stelleinheit oder passiv durch einen Anschlag (31) betätigbar ist.

4. Vorrichtung nach Anspruch 3, **dadurch gekennzeichnet, dass** die Stelleinheit oder der Anschlag (31) an oder in dem Aufnahmebehälter (18) oder außerhalb des Aufnahmebehälters (18) vorgesehen ist.

5. Vorrichtung nach Anspruch 1, **dadurch gekennzeichnet, dass** das Verschlusselement (32) an einem in dem Aufnahmebehälter (18) öffenbaren Abschnitt seitlich oder am Boden vorgesehen ist.

6. Vorrichtung nach einem der vorhergehenden Ansprüche, **dadurch gekennzeichnet, dass** der Aufnahmebehälter (18) zu einer Abtransporteinheit (34) in der Entleerungsposition (22) positionierbar ist und der Abtransporteinheit (34) zumindest ein Fertigungsteil (13) über den öffenbaren Abschnitt der Abtransporteinheit (34) zuführbar ist.

7. Vorrichtung nach Anspruch 1, **dadurch gekennzeichnet, dass** zumindest ein an den Deckel (26) angrenzender Wandabschnitt (42) des Aufnahmebehälters (18) als Abstreifer ausgebildet ist.

## Claims

1. Device for discharging production parts (13) from a process area (19), in particular from a process area in machine tools, which device, after the machining of at least one production part, is positioned for reception in the process area (19) in order to bring the at least one production part out of the process area (19), having a receiving container (18) which is provided for receiving at least one production part (13) and, for receiving the at least one production part (13), is adapted to the cyclic machining of the production parts (13), **characterized in that** the receiving container (18) has a lid (26) and an openable section and has a closure element (32), the lid (26) closing after the production part (13) is received or while the receiving container (18) is being brought out of the process area (19), and the closure element (32) being opened in an emptying position (22) of the receiving container (18).

2. Device according to Claim 1, **characterized in that** the lid (26) of the receiving container (18) is actuated before or during the transfer of the receiving container (18) into the receiving position (12).

3. Device according to Claim 1, **characterized in that** the lid (26) of the receiving container (18) is actuated actively by an actuating unit or passively by a stop (31).

4. Device according to Claim 3, **characterized in that** the actuating unit or the stop (31) is provided on or in the receiving container (18) or outside the receiving container (18).

5. Device according to Claim 1, **characterized in that** the closure element (32) is provided laterally on a section that is opened in the receiving container (18) or is provided on the base.

6. Device according to one of the preceding claims, **characterized in that** the receiving container (18) can be positioned relative to a removal unit (34) in the emptying position (22), and at least one production part (13) is fed to the removal unit (34) via that section of the removal unit (34) which can be opened.

7. Device according to Claim 1, **characterized in that** at least one wall section (42), adjoining the lid (26), of the receiving container (18) is designed as a wiper.

## Revendications

1. Dispositif pour évacuer des pièces finies (13) d'une chambre de traitement (19), notamment d'une chambre de traitement dans des machines-outils, qui est positionné dans la chambre de traitement (19) après l'usinage d'au moins une pièce finie à recevoir, afin de ressortir l'au moins une pièce finie de la chambre de traitement (19), comprenant un récipient de réception (18) qui est prévu pour recevoir au moins une pièce finie (13) et qui, pour recevoir l'au moins une pièce finie (13), peut être adapté au traitement cadencé des pièces finies (13),
**caractérisé en ce que**
le récipient de réception (18) présente un couvercle (26) et une portion ouvrable avec un élément de fermeture (32), le couvercle (26) se fermant après que la pièce finie (13) a été reçue ou pendant le retrait du récipient de réception (18) hors de la chambre de traitement (19), et l'élément de fermeture (32) étant ouvert dans une position de vidage (22) du récipient de réception (18).

2. Dispositif selon la revendication 1, **caractérisé en ce qu'**avant ou pendant le transfert du récipient de réception (18) dans la position de réception (12), le couvercle (26) du récipient de réception (18) est actionné.

3. Dispositif selon la revendication 1, **caractérisé en ce que** le couvercle (26) du récipient de réception (18) est actionné activement par une unité de commande ou passivement par une butée (31).

4. Dispositif selon la revendication 3, **caractérisé en ce que** l'unité de commande ou la butée (31) est prévue sur ou dans le récipient de réception (18) ou en dehors du récipient de réception (18).

5. Dispositif selon la revendication 1, **caractérisé en ce que** l'élément de fermeture (32) est prévu latéralement ou au fond sur une portion ouvrable dans le récipient de réception (18).

6. Dispositif selon l'une quelconque des revendications précédentes, **caractérisé en ce que** le récipient de réception (18) est positionné vers une unité d'évacuation (34) dans la position de vidage (22) et au moins une pièce finie (13) peut être acheminée à l'unité d'évacuation (34) par le biais de la portion ouvrable de l'unité d'évacuation (34).

7. Dispositif selon la revendication 1, **caractérisé en ce qu'**au moins une portion de paroi (42) du récipient de réception (18) adjacente au couvercle (26) est réalisée sous forme de racle.
